# EUROPÄISCHE PATENTSCHRIFT

(11) **EP 1 005 150 B1**
(45) Veröffentlichungstag und Bekanntmachung des Hinweises auf die Patenterteilung: **03.07.2002**
(21) Anmeldenummer: 99122742.2
(22) Anmeldetag: 16.11.1999
(51) Int. Cl.: H02P 13/06, B23K 9/073

(54) **Schweissstromquelle**
Welding power source
Source de courant de soudage

(30) Priorität: 25.11.1998 DE 19854255
(43) Veröffentlichungstag der Anmeldung: 31.05.2000
(73) Patentinhaber: Lorch Schweisstechnik GmbH, 71549 Auenwald (DE)
(72) Erfinder: Jaeschke, Birger, 71522 Backnang (DE); Prinz, Gerhard, 71554 Weissach im Tal (DE)
(74) Vertreter: Patentanwalts-Partnerschaft Rotermund + Pfusch

(56) Entgegenhaltungen:
- EP-A- 0 409 431
- WO-A-98/48432
- DE-A- 3 721 591
- FR-A- 2 345 848
- FR-A- 2 695 769
- US-A- 4 622 513

## Beschreibung

Die Erfindung betrifft eine Schweißstromquelle mit einem Transformator, der primärseitig zum Anschluß an eine Wechselstromquelle bzw. Wechselstromversorgung und sekundärseitig zur Speisung einer Last (Schweißprozess) mit hohem elektrischen Strombedarf ausgelegt ist.

Falls sehr unterschiedliche Werkstücke geschweißt werden sollen, muß eine Schweißstromquelle bezüglich ihrer ausgangsseitigen Strom-Spannungs-Charakteristik steuerbar sein. In diesem Zusammenhang ist aus der DE 32 15 806 C2 bekannt, jeder Phase der Sekundärwicklungen eines Transformators einen Gleichrichter und jedem Gleichrichter einen separaten Ein-Aus-Schalter sowie in Reihe dazu einen Umschalter zuzuordnen, durch den der jeweilige Gleichrichter mit unterschiedlichen Anzapfungen der zugeordneten Phase der Sekundärwicklungen verbindbar ist. Je nach Stellung der Ein-Aus-Schalter arbeiten unterschiedlich viele Gleichrichter parallel; dadurch wird eine Grobeinstellung der gewünschten Betriebsparameter vorgenommen. Je nach Stellung der Umschalter können unterschiedliche Feineinstellungen der Betriebsparameter bewirkt werden. Insgesamt läßt sich damit eine große Vielfalt von Einstellungen erreichen. Allerdings kann der notwendige konstruktive-Aufwand sehr groß werden. Denn alle Schalter müssen unter Last schaltbar sein und großen Stromstärken standhalten.

Bei einer aus der DE 37 22 373 A1 bekannten Schweißstromquelle wird eine stufig einstellbare Strom-Spannungs-Charakteristik dadurch ermöglicht, daß in Reihe mit der Sekundärwicklung des Transformators und der Last ein Kondensatorblock mit umschaltbaren Kapazitäten angeordnet ist. Dieser besteht aus einer Vielzahl parallel angeordneter Kondensatoren mit jeweils separat zugeordneten Parallelwiderständen, wobei eine Kondensator-Parallelwiderstand-Einheit ständig wirksam geschaltet ist und die übrigen Einheiten durch separate Schalter parallel zuschaltbar sind. Auch hier kann der konstruktive Aufwand unerwünscht groß werden, da einerseits Kondensatoren mit großer Kapazität und andererseits Schalter mit hoher Strombelastbarkeit notwendig sind.

Aus der DE 37 21 591 A1 ist eine Anordnung mit den Merkmalen des Anspruchs 1 mit Ausnahme des letzten Absatres bekannt, jedoch betrifft dieser Stand der Technik Keine Schweißstromquelle, sondern eine Anordnung zum primärseitigen Umschalten des Übersetzungsverhältnisses eines Hochfrequenz-Transformators bekannt, der zur Stromversorgung einer Röntgenröhre dient. Zur Stromeinspeisung ist primärseitig des Transformators eine an ein Versorgungsstromnetz angeschlossene steuerbare Gleichrichter-Wechselrichter-Anordnung vorgesehen, die den 50 Hz-Wechselstrom des Versorgungsstromnetzes in einen 20 kHz-Wechselstrom umsetzt, der über einen Stufenschalter der Primärseite des Hochfrequenz-Transformators zugeführt und von diesem auf eine zur Versorgung von Röntgenröhren typische bzw. notwendige Hochspannung transformiert wird. Mittels einer Regleranordnung wird ein Soll-Istwert-Vergleich der elektrischen Spannung des die Röntgenröhre speisenden elektrischen Stromes durchgeführt. Bei entsprechender Soll-Istwert-Abweichung trennt eine Steuerschaltung den Primärkreis des Transformators mittels eines Lastschalters auf. Darauf wird mit Hilfe des Stufenschalters eine optimalen Betrieb der Röntgenröhre ermöglichende Teilwicklung der Primärseite des Transformators eingestellt, worauf der Lastschalter wieder geschlossen wird. Im übrigen erfolgt eine Feinregelung der elektrischen Spannung an der Röntgenröhre dadurch, daß die Steuerschaltung in das Übersetzungsverhältnis der steuerbaren Gleichrichter-Wechselrichter-Anordnung eingreift.

Die WO 98/48432 steht im Zusammenhang mit einer unterbrechungslosen Umschaltung einer Regelwicklung eines Transformators. Dabei erfolgt ein weitestgehend lastfreies Umschalten von Schalterkontakten dadurch, daß vor einer Umschaltung Bypass-Stromwege parallel zu den umzuschaltenden Kontakten eingeschaltet werden und ein weitestgehend abbrandfreies Öffnen bzw. Schließen der umzuschaltenden Schalterkontakte ermöglicht wird. Die Bypass-Stromwege können ihrerseits durch einen Thyristorkreis kontaktlos geschlossen bzw. geöffnet werden.

Bei einer aus der DE 196 39 163 A1 bekannten Einrichtung zur Anpassung eines Verbrauchers an die einspeisende Netzspannung ist primärseitig eines Transformators ein alle Phasen simultan unterbrechender bzw. verbindender Hauptschalter sowie zwischen dem Hauptschalter und der Primärseite ein Schalteraggregat angeordnet, durch das unterschiedliche Primärwicklungen bzw. Primärwicklungsbereiche eingeschaltet werden können. Dies erfolgt in Abhängigkeit von der zur Verfügung- stehenden Spannung der Wechselstromversorgung, wobei eine Steuerschaltung der Stromquelle eingangsseitig mit Detektoren zur Erfassung der Versorgungsspannung und ausgangsseitig mit Treibern für die Umschaltanordnung verbunden ist und analog zum Pegel der Versorgungsspannung die Schaltelemente der der jeweiligen Versorgungsspannung zugeordneten Primärwicklungen bzw. Primärwicklungsbereiche einschaltet. Dabei können gleichzeitig die Schaltelemente der übrigen Primärwicklungen bzw. Primärwicklungsbereiche in geöffnetem Zustand verriegelt werden. Auf diese Weise wird gewährleistet, daß sekundärseitig des Transformators weitestgehend unabhängig vom Pegel der Versorgungsspannung auf der Primärseite des Transformators gleichbleibende Betriebsverhältnisse gegeben sind und gefährliche Überspannungen vermieden werden.

Nach der DE 34 16 130 C2, welche sich auf ein Verfahren zur Umschaltung von Transformator-Stufenschaltern bei Netzeinspeiseeinrichtungen mit netzgeführten Wechselrichtern bezieht, ist vorgesehen, beim Umschalten eines Stufenschalters in den Wechselrichter-Zweigpaaren Kurzschlüsse herbeizuführen, um einerseits elektrische Spannungsdifferenzen zwischen den Stufenschalteranschlüssen bei Umschaltung eines Stufenschalters zu vermeiden und andererseits dem Wechselrichter vorgeschaltete Leistungsschalter mit Hilfsschalterfunktion für den Stufenschalter zu erübrigen.

Aufgabe der Erfindung ist es, bei einer Schweißstromquelle der eingangs angegebenen Art mit geringem konstruktiven Aufwand eine vielfältig steuerbare Strom-Spannungs-Charakteristik zu ermöglichen.

Hierzu besitzt die Stromquelle zusätzlich zu den eingangs angegebenen Merkmalen
- ein primärseitiges Hauptschaltaggregat, welches zwischen einem Einschaltzustand zur leistungsmäßig praktisch ungedrosselten Verbindung von Wechselstromversorgung und Primärseite des Transformators sowie einem Ausschaltzustand zur leistungsmäßig stark gedrosselten Verbindung oder Unterbrechung der Verbindung von Wechselstromversorgung und Primärseite des Transformators umschaltbar bzw. umsteuerbar ist,
- ein in Reihe mit dem Hauptschaltaggregat - vorzugsweise zwischen Hauptschaltaggregat und Primärseite des Transformators - angeordnetes Umschaltaggregat, welches zwischen unterschiedlichen Wicklungen bzw. Wicklungsanzapfungen der Primärseite des Transformators bzw. einer der Primärseite des Transformators vorgeschalteten Drosselspule oder Drosselspulenanordnung umzuschalten und damit auch zwischen unterschiedlichen elektrischen Betriebsparametern auf der Sekundärseite des Transformators umzusteuern gestattet,
- eine den Schaltaggregaten zugeordnete Sperrung, welche das Umschaltaggregat im Einschaltzustand des Hauptschaltaggregates gegen Umschaltung und/oder das Hauptschaltaggregat beim Umschalten des Umschaltaggregates gegen Einnahme seines Einschaltzustandes sperrt, und
- eine den Schaltaggregaten zugeordneten Sperrung, welche das Umschaltaggregat im Einschaltzustand des Hauptschaltaggregates gegen Umschaltung und/oder das Hauptschaltaggregat beim Umschalten des Umschaltaggregates gegen Einnahme seines Einschaltzustandes sperrt und als Steuerschaltung mit einem Geber-und/oder einem Eingang für Umschaltbefehle zur Betätigung des Umschaltaggregates ausgebildet ist, bei einem Umschaltbefehl zunächst das Hauptschaltaggregat in den Ausschaltzustand setzt, dann das Umschaltaggregat entsprechend dem Umschaltbefehl betätigt und danach das Hauptschaltaggregat erneut in den Einschaltzustand stellt,
- wobei nach Eingang eines Umschaltbefehles oder Betätigung eines Umschalters das Umschaltaggregat erst nach einer zur Erreichung des Ausschaltzustandes des Hauptschaltaggregates notwendigen Verzögerungszeit eingeschaltet wird und/oder das Hauptschaltaggregat seinen erneuten Einschaltzustand erst nach einer zur Durchführung der Umschaltung des Umschaltaggregates notwendigen Verzögerungszeit erreicht.

Die Erfindung beruht auf dem allgemeinen Gedanken, die Veränderung der ausgangsseitigen Strom-Spannungs-Charakteristik der Schweißstromquelle durch primärseitig des Transformators angeordnete und damit einer vergleichsweise sehr geringen elektrischen Strombelastung ausgesetzte Schaltvorrichtungen vorzunehmen, wobei die Belastbarkeit und dementsprechend der konstruktive Aufwand für die zur Veränderung der Strom-Spannungs-Charakteristik dienenden Schaltelemente noch dadurch weiter vermindert wird, daß Umschaltungen nur dann möglich sind, wenn die vorgenannten Schaltvorrichtungen elektrisch lastfrei sind bzw. unter weitestgehend vernachlässigbarer Last arbeiten.

Wenn der Ausschaltzustand des Hauptschaltaggregates noch eine bezüglich des elektrischen Stromflusses stark gedrosselte Verbindung von Wechselstromversorgung und Primärseite des Transformators ermöglicht, wird der Vorteil geboten, daß auf der Sekundärseite des Transformators arbeitende Sensoren, welche in der Regel ohnehin zur Erfassung von Betriebsparametern des Lastbetriebes vorgesehen sind, auch Schaltbetätigungen des Umschaltaggregates im Ausschaltzustand des Hauptschaltaggregates erfassen können.

Die den Schaltaggregaten zugeordnete Sperrung ist als Steuerschaltung mit einem (manuell betätigbaren) Geber und/oder einem Eingang für Umschaltbefehle zur Betätigung des Umschaltaggregates ausgebildet, wobei die Steuerschaltung bei einem Umschaltbefehl zunächst das Hauptschaltaggregat in den Ausschaltzustand setzt und dann das Umschaltaggregat entsprechend dem Umschaltbefehl betätigt sowie danach das Hauptschaltaggregat erneut in den Einschaltzustand stellt.

Durch den Eingang für Umschaltbefehle an der Steuerschaltung kann die erfindungsgemäße Schweißstromquelle in eine automatisierte Fertigungsstraße integriert werden, wobei dann eine übergeordnete Prozeßsteuerung für die Fertigungsstraße die für die jeweiligen Fertigungsprozesse vorgesehenen Strom-Spannungs-Charakteristiken der Stromquelle durch entsprechende Umschaltbefehle aufruft, die dann von der Steuerschaltung ausgeführt werden.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung näher beschrieben werden.

Dabei zeigt
- Fig. 1: ein schematisiertes Schaltbild der erfindungsgemäßen Stromquelle,
- Fig. 2: ein Flußdiagramm zur Erläuterung der Funktion der zugehörigen Steuerung und
- Fig. 3: verschiedenartige Schalterkaskaden, die sich vorteilhaft als Umschaltaggregate bei der Erfindung einsetzen lassen.

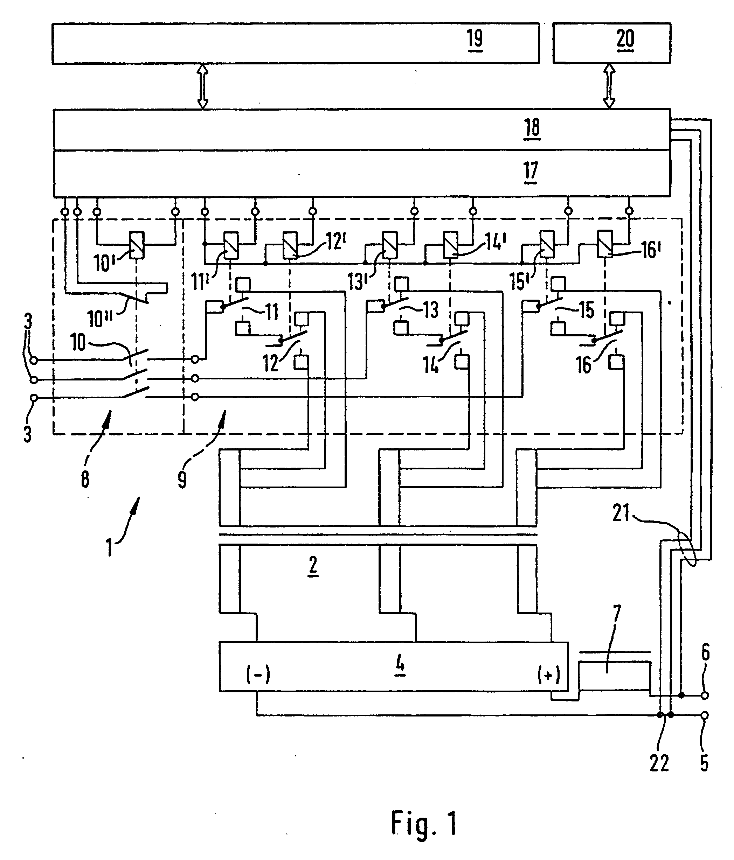

Gemäß Fig. 1 kann eine erfindungsgemäß ausgebildete Schweißstromquelle 1 einen (dreiphasigen) Transformator 2 aufweisen, welcher primärseitig über weiter unten dargestellte Schaltorgane mit Netzanschlüssen 3 zum Anschluß der Schweißstromquelle 1 an ein entsprechendes Wechselstromnetz bzw. eine Wechselstromversorgung und sekundärseitig mit der Eingangsseite eines Gleichrichters 4 verbunden ist, der ausgangsseitig in grundsätzlich bekannter Weise einen Werkstückanschluß 5 sowie einen Schweißelektrodenanschluß 6 aufweist, wobei durch eine zwischen Gleichrichter 4 und Schweißelektrodenanschluß 6 angeordnete Drossel 7 eine Überlastung bzw. ein Kurzschluß des Gleichrichters 4 während der Schweißarbeit verhindert wird.

Die Primärseite des Transformators 2 ist mit den Netzanschlüssen 3 über zwei elektrisch in Reihe liegende Schaltanordnungen, und zwar ein Hauptschaltaggregat 8 sowie ein Umschaltaggregat 9, verbunden.

Im dargestellten Beispiel besitzt das Hauptschaltaggregat 8 ein dreiphasig schaltendes Schütz 10, dessen Schaltkontakte simultan von einem Aktor 10' betätigt werden, wobei gleichzeitig ein Signalschalter 10" synchron zu den Schaltkontakten des Schützes 10 geschlossen bzw. geöffnet wird.

Das Umschaltaggregat 9 umfaßt im dargestellten Beispiel insgesamt sechs Relais 11 bis 16, die jeweils paarweise zu einer "halben Baumstruktur" zusammengefaßt und jeweils einer Phase der dreiphasigen Primärwicklung des Transformators 2 zugeordnet sind. Je nach Stellung der Relais 11 bis 16 werden unterschiedliche Anzapfungen der Primärwicklungsphasen mit einem der Netzanschlüsse 3 und damit mit einer der Phasen der dort angeschlossenen Wechselstromversorgung verbunden. Die Schaltung der Relais einer Phase kann unabhängig von der Schaltung der Relais der anderen Phasen erfolgen. Abweichend von der in Fig. 1 dargestellten Schaltlage können also das Relais 11 und/oder das Relais 12 andere Schaltlagen einnehmen als die entsprechenden Relais 13 und 15 bzw. 14 und 16 der beiden anderen Phasen.

Die Relais 11 bis 16 werden durch Aktoren 11' bis 16' betätigt.

Die Steuerung der Aktoren 10' bis 16' erfolgt mittels einer Treiberschaltung 17, die ihrerseits von einer Steuerschaltung 18 gesteuert wird, wobei die Schaltungen 17 und 18 zu einer baulichen Einheit zusammengefaßt sein können.

Die Steuerschaltung 18 kooperiert mit einer übergeordneten Prozeßsteuerung 19 und/oder einer manuell betätigbaren Steuerungseinheit 20, welche gegebenenfalls auch die Funktion einer Anzeigeeinheit übernehmen kann und dementsprechend die jeweiligen Betriebszustände der Schweißstromquelle 1 in grundsätzlich beliebiger Form anzeigt.

Die Steuerschaltung 18 erhält von der Prozeßsteuerung 19 und/oder von der Steuerungseinheit 20 Betätigungsbefehle für das Hauptschaltaggregat 8 und/oder - insbesondere - das Umschaltaggregat 9. Dabei dient das letztere Aggregat 9 dazu, durch unterschiedliche Schaltstellungen der Relais 11 bis 16 die elektrische Strom-Spannungs-Charakteristik des an den Anschlüssen 5 und 6 zur Verfügung stehenden Last- bzw. Schweißstromes an die jeweiligen Gegebenheiten, insbesondere der Werkstücke, anzupassen.

In diesem Zusammenhang besteht eine wichtige Besonderheit der Erfindung darin, daß die Steuerschaltung 18 bei einem Befehl zu einer Umschaltung des Umschaltaggregates 9 zunächst überprüft bzw. sicherstellt, daß das Hauptschaltaggregat 8 geöffnet ist oder wird; danach wird die vorgesehene Umschaltung des Umschaltaggregates 9 - vollständig bzw. im wesentlichen lastfrei - vorgenommen; nach erfolgter Umschaltung wird das Hauptschaltaggregat 8 wiederum eingeschaltet.

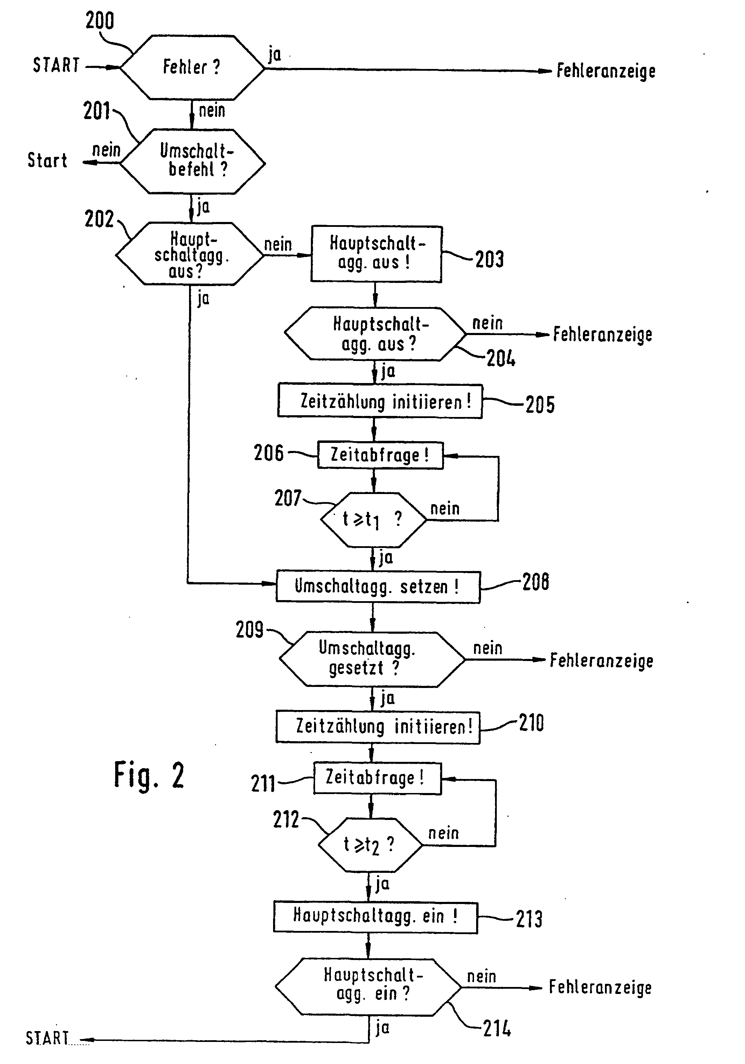

Durch diese weiter unten anhand der Fig. 2 erläuterte Funktionsweise der Steuerschaltung 18 wird gewährleistet, daß die Schaltelemente bzw. Relais 11 bis 16 des Umschaltaggregates 9 beim Umsehaltvorgang nicht bzw. vernachläßigbar wenig elektrisch belastet werden. Dementsprechend können die Schaltelemente bzw. Relais 11 bis 16 des Umschaltaggregates 9 eine einfache, preisgünstige Konstruktion aufweisen. Dies ist vor allem dann außerordentlich vorteilhaft, wenn gemäß einer abgewandelten, weiter unten erläuterten Ausführungsform eine besonders vielstufige Umschaltung mit entsprechend vielen Schaltelementen bzw. Relais vorgesehen ist.

Die Steuerschaltung 18 kann (zusammen mit der Treiberschaltung 17) gemäß dem Flußdiagramm der Fig. 2 arbeiten.

Zunächst wird der Fall betrachtet, daß die Steuerschaltung 18 nach einer Betriebspause von der Prozeßsteuerung 19 und/oder der Steuerungseinheit 20 eingeschaltet wird und einen Stellbefehl für eine bestimmte Schaltstellung des Umschaltaggregates 9 erhält.

Zuerst kann die Steuerschaltung 18 entsprechend Position 200 überprüfen, ob ein Fehlersignal vorliegt. Ein derartiges Fehlersignal kann auf einer Störung der Steuerschaltung 18 beruhen oder durch mangelnde Betriebsbereitschaft oder eine Störung eines mit der Schweißstromquelle 1 zusammenwirkenden Systems, z.B. Schweißroboter, verursacht sein. Derartige Fehlersignale weiterer Systeme können von diesen direkt über entsprechende Eingänge der Steuerschaltung 18 zugeführt werden. Statt dessen besteht auch die Möglichkeit, daß die Prozeßsteuerung 19 entsprechende Fehlersignale an die Steuerschaltung 18 übermittelt, vorausgesetzt, daß die Prozeßsteuerung 19 die vorgenannten weiteren Systeme überwacht.

Falls nun ein solches Fehlersignal vorliegt, kann eine Fehleranzeige erfolgen. Statt dessen kann die Steuerschaltung 8 auch in einen Wartezustand übergehen, welcher erst dann beendet wird, wenn das Fehlersignal bzw. die Fehlersignale gelöscht werden.

Sobald die Löschung der Fehlersignale erfolgt ist, bzw. wenn kein Fehlersignal vorliegt, wird in Position 202 der Zustand des Hauptschaltaggregates 8 überprüft. Aufgrund der vorangegangen Betriebspause befindet sich das Hauptschaltaggregat 8 im geöffneten Zustand, das heißt die Primärseite des Transformators 2 ist von den Netzanschlüssen 3 elektrisch abgetrennt.

Dieser aufgetrennte Zustand des Hauptschaltaggregates 8 wird nunmehr unverändert gelassen, und gemäß Position 208 wird nunmehr das Umschaltaggregat 9 entsprechend dem vorliegenden Stellbefehl gesetzt.

Falls eine entsprechende Sensorik vorhanden ist, kann danach in Position 209 überprüft werden, ob das Umschaltaggregat 9 den Stellbefehl korrekt ausgeführt hat. Sollte dies nicht der Fall sein, kann eine Fehleranzeige erfolgen.

Bei korrekter Funktion des Umschaltaggregates 9 kann nun gemäß Position 210 eine Zeitzählung initiiert werden. Sodann erfolgt in Position 211 eine Zeitabfrage, wobei in Position 212 überprüft wird, ob seit der Initiierung der Zeitzählung eine Zeitspanne t verstrichen ist, die gleich oder größer als ein vorgegebenes Zeitintervall t₂ ist.

Sobald dieses Zeitintervall t₂ überschritte wird, wird gemäß Position 213 das Hauptschaltaggregat 8 geschlossen.

Nachfolgend kann in Position 214 der Zustand des Hauptschaltaggregates abgefragt werden, beispielsweise dadurch, daß überprüft wird, ob über den zusammen mit dem Schütz 10 schließenden Signalschalter 10" ein Signalstrom fließt oder nicht.

Sollte dies nicht der Fall sein, kann eine Fehleranzeige erfolgen.

Bei korrekter Funktion bzw. nach dem Schließen des Hauptschaltaggregates 8 werden nachfolgend nur die Abfragen gemäß den Positionen 200 und 201 durchgeführt, solange die Steuerschaltung 18 keinen Befehl zu einer Umschaltung des Umschaltaggregates 9 erhält.

Sobald ein solcher Umschaltbefehl vorliegt, kann von der Abfrage nach Position 201 zur Abfrage nach Position 202 übergegangen werden, d.h. es wird der Zustand des Hauptschaltaggregates 8 überprüft. Da dieses Hauptschaltaggregat 8 nach dem vorangehend geschilderten Betriebsablauf geschlossen und damit "nicht geöffnet" ist, erfolgt ein Übergang zur Position 203, d.h. das Hauptschaltaggregat 8 wird geöffnet. Gegebenenfalls kann die Abfrage nach Position 202 auch entfallen und sofort der Befehl zum öffnen des Hauptschaltaggregates 8 gemäß Position 203 gegeben werden.

Danach kann gemäß Position 204 abgefragt werden, ob das Hauptschaltaggregat 8 in den Ausschaltzustand gebracht wurde. Sollte dies nicht der Fall sein, kann eine Fehleranzeige erfolgen.

Falls die Rückmeldung vorliegt, daß das Hauptschaltaggregat 8 in den Ausschaltzustand umgeschaltet wurde, kann gemäß Position 205 eine Zeitzählung initiiert werden, wobei dann nachfolgend gemäß Position 206 eine Zeitabfrage erfolgt und danach in Position 207 überprüft wird, ob die seit Initiierung der Zeitzählung verstrichene Zeit t ein vorgegebenes Zeitintervall t₁ erreicht oder überschritten hat.

Sobald der Zeitschwellwert t₁ erreicht bzw. überschritten wird, wird gemäß Position 208 das Umschaltaggregat 9 entsprechend dem vorliegenden Umschaltbefehl geschaltet.

Die nachfolgenden Positionen 209 bis 214 wurden bereits vorangehend beschrieben.

Im Ergebnis wird damit nach Umschaltung des Umschaltaggregates 9 das Hauptschaltaggregat 8 wieder in den Einschaltzustand gebracht, so daß die Schweißstromquelle 1 einen Schweißstrom mit einer entsprechend der neuen Schaltstellung des Umschaltaggregates 9 veränderten Strom-Spannungs-Charakteristik liefert.

Abweichend von der Darstellung der Fig. 2 können ggf. die gemäß den Positionen 204, 209 und 214 vorgesehenen Abfragen, mit denen die Ausführung der in den jeweils vorangehenden Positionen 203, 208 und 213 erfolgten Schaltbefehle überprüft werden, ganz oder teilweise entfallen, wenn von einer hinreichend großen Zuverlässigkeit der Schaltaggregate 8 bzw. 9 ausgegangen werden kann.

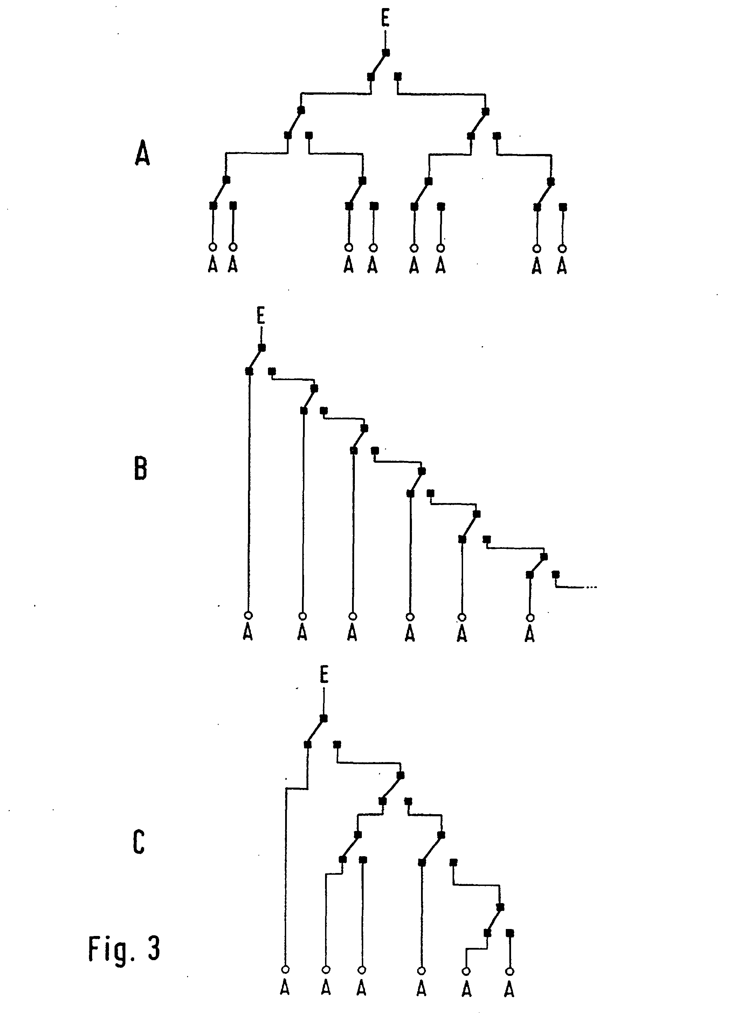

Insbesondere kann von der Abfrage gemäß Position 209 abgesehen werden, wenn durch einen unerwünschten Schaltzustand des Umschaltaggregates 9 keine Kurzschlüsse bzw. praktisch keine Zerstörungen in bzw. an der Schweißstromquelle 1 zu erwarten sind, wie es z.B. bei den Relais-Kaskaden der Fig. 1 sowie der weiter unten erläuterten Fig. 3 der Fall ist.

Durch die Positionen 205 bis 207 bzw. 211 bis 213 wird jeweils eine Zeitverzögerung zwischen dem Ausschalten des Hauptschaltaggregates (Position 203) und dem Schalten des Umschaltaggregates (Position 208) bzw. zwischen dem Schalten des Umschaltaggregates (Position 208) und dem Einschalten des Hauptschaltaggregates (Position 213) bewirkt.

Damit soll der Tatsache Rechnung getragen werden, daß die in den Positionen 203, 208 und 213 vorgesehenen Schaltbetätigungen bis zu ihrem Abschluß eine gewisse Betätigungszeit benötigen. Denn sowohl der Aktor 10' des Schützes 10 des Hauptschaltaggregates 8 als auch die Aktoren 11' bis 16' des Umschaltaggregates 9 reagieren als in der Regel elektromagnetische Stellorgane mit einer gewissen Verzögerung auf das Ein- bzw. Ausschalten des elektrischen Stromes. Darüber hinaus führen die beweglichen Kontakte des Schützes 10 bzw. der Relais 11 bis 16 beim Schließen des Schützes 10 bzw. beim Umschalten der vorgenannten Relais 11 bis 16 eine mehr oder weniger ausgeprägte Prellbewegung aus, bevor der jeweils einzuschaltende elektrische Leitungsweg sicher geschlossen ist. Durch die zwischen den Positionen 203 und 208 bzw. 208 und 213 vorgesehenen Verzögerungszeiten kann nun das Schaltverhalten des Schützes 10 bzw. der Relais 11 bis 16 hinreichend berücksichtigt und sichergestellt werden, daß eine Umschaltung eines oder mehrerer der Relais 11 bis 16 nur dann durchgeführt wird, wenn die vom Schütz 10 gesteuerten Stromwege unterbrochen sind.

Abweichend von den obigen Ausführungen sowie der Darstellung in Fig. 1 kann vorgesehen sein, daß das Hauptschaltaggregat 8 in seinem geöffneten Zustand keine vollständige Unterbrechung der Leitungswege zwischen den Netzanschlüssen 3 und dem Umschaltaggregat 9 bewirkt sondern stattdessen im "offenen" Zustand noch bezüglich des elektrischen Stromflusses stark gedrosselte elektrische Leitungswege eingeschaltet läßt.

Dazu kann beispielsweise vorgesehen sein, parallel zu den Schaltern des Schützes 10 jeweils einen Leitungsweg mit hohem elektrischen Widerstand anzuordnen, so daß im geöffneten Zustand des Schützes 10 noch eine bezüglich des elektrischen Stromflusses stark gedrosselte elektrische Verbindung zwischen den Netzanschlüssen 3 und dem Umschaltaggregat 9 bestehen bleibt. Grundsätzlich kann ein solcher Leitungsweg durch beliebige, gegebenenfalls auch kapazitive und/oder induktive, elektrische Elemente realisiert werden. In der Regel sind im Hinblick auf geringe Kosten sowie konstruktive Einfachheit ohmsche Widerstände bevorzugt.

Anstelle des Schützes 10 kann auch eine kontaktlos arbeitende Halbleiterschaltung, z.B. eine Thyristorschaltung, vorgesehen sein, die zwischen einem Zustand mit hohem elektrischen Widerstand und einem Zustand mit vernachlässigbaren bzw. geringen elektrischen Widerstand umsteuerbar ist, gegebenenfalls mehrstufig oder stufenlos, wobei der Zustand mit hohem elektrischen Widerstand als Sperrzustand ausgebildet sein kann.

Bei derartigen Ausführungsformen werden dann Umschaltungen des Umschaltaggregates 9 immer nur dann durchgeführt, wenn das Hauptschaltaggregat 8 seinen Sperrzustand bzw. einen Zustand mit sehr hohem elektrischen Widerstand einnimmt. Bei hinreichend großem elektrischen Widerstand kann in praktisch gleicher Weise wie bei vollständiger Auftrennung der Leitungswege im Hauptschaltaggregat 8 sichergestellt werden, daß die Schaltelemente des Umschaltaggregates 9 beim Umschalten nicht durch Funkenschlag od.dgl. beschädigt werden können.

Darüber hinaus wird der Vorteil geboten, daß bei Schaltbetätigungen des Umschaltaggregates 9 sekundärseitig des Transformators 2 den Umschaltungen entsprechende Veränderungen der Strom-Spannungs-Charakteristik unmittelbar meßbar sind. Dementsprechend können Elemente, die beim Last- bzw. Schweißbetrieb die jeweilige Ist-Strom-Spannungs-Charakteristik erfassen gegebenenfalls auch zur Überwachung der Schaltbetätigungen des Umschaltaggregates 9 bei "geöffnetem" Hauptschaltaggregat 8 herangezogen werden.

Gemäß Fig. 1 können dazu beispielsweise Meßanschlußleitungen 21 dienen, mit denen beim Last- bzw. Schweißbe-trieb die elektrische Spannungsdifferenz zwischen den Anschlüssen 5 und 6 bzw. der Spannungsabfall an einem Meßwiderstand 22 und damit die Stärke des Schweißstromes von der Steuerschaltung 18 erfaßt werden.

In Fig. 3 sind verschiedene Strukturen für Relais-Kaskaden dargestellt. Dabei zeigt das Bild A der Fig. 3 eine Kaskade in "echter" Baumstruktur, das Bild B eine Kaskade in "halber" Baumstruktur und das Bild C eine Kaskade in "gemischter" Baumstruktur. Alle dargestellten Kaskaden können an ihrem Eingang E mit einer der Phasen der Ausgangsseite des Hauptschaltaggregates 8 in Fig. 1 verbunden sein, während die Ausgänge A an entsprechende Anzapfungen bzw. Teile primärseitiger Phasenwicklungen des Transformators 2 anschließen, d.h. die Primärseite des Transformators 2 muß mit entsprechend vielen Wicklungsteilen bzw. Wicklungsanzapfungen versehen sein.

Wenn Relais-Kaskaden mit einer großen Anzahl von Relais und entsprechend strukturierte Primärwicklungen des Transformators 2 vorgesehen sind, läßt sich die Strom-Spannungs-Charakteristik der Stromquelle 1 in Fig. 1 entsprechend feinstufig verändern.

Durch die Fig. 3 wird besonders deutlich, daß der allgemeine Erfindungsgedanke, Umschaltungen des Umschaltaggregates 9 und dementsprechend Umschaltungen der zur Realisierung des Umschaltaggregates 9 genutzten Relais lastfrei bzw. unter äußerst geringer Last durchzuführen, zu großen Kostenvorteilen bei der Herstellung der erfindungsgemäßen Stromquelle führt: Alle Relais können eine vergleichsweise geringe Belastbarkeit und dementsprechend eine einfache und besonders preiswürdige Konstruktion aufweisen, so daß in Anbetracht der großen Anzahl von Relais erhebliche Kosten eingespart werden.

Die Relais-Kaskaden der Fig. 3 werden ebenso wie die jeweils nur aus zwei Relais 11, 12 bzw. 13, 14 bzw. 15, 16 bestehenden Relais-"Kaskaden" der Fig. 1 vorzugsweise jeweils Einzelphasen der Primärwicklung des Transfomators 2 zugeordnet. Dies ist vorteilhaft, weil bei einem eventuell falsch schaltenden Relais nur vergleichsweise kleine Fehler bei der gewünschten Strom-Spannungs-Charakteristik auf der Sekundärseite des Transformators 2 auftreten können. Grundsätzlich ist es jedoch auch möglich, eine Relais-Kaskade mit mehreren Wicklungsphasen zu verschalten.

Besonders vorteilhaft ist die baumartige Struktur der Relais-Kaskaten der Fig. 3, d.h. jedes Relais hat zwei alternative Schaltstellungen, in denen jeweils einer von zwei alternativen elektrischen Strompfaden eingeschaltet ist. Dies hat zur Folge, daß auch bei Schaltfehlern eines oder mehrerer Relais keine Kurzschlußschleife gebildet werden kann, vielmehr ergeben auch "falsche" Schaltstellungen der Relais immer einen "erlaubten", zumindest aber kurzschlußfreien, wenn auch bezüglich der Strom-Spannungs-Charakteristik auf der Sekundärseite des Transformators 2 unerwünschten Strompfad.

Die Aktoren 11' bis 16' der Relais 11 bis 16 werden vorzugsweise ebenso wie die nicht dargestellten Aktoren der Relais der Fig. 3 über eine separate, potentialfreie Stromversorgung (nicht dargestellt) der Treiberschaltung 17 mit Strom beaufschlagt, um die gewünschten Schaltoperationen der Relais auszuführen. Entsprechendes gilt für den Aktor 10' des Schützes 10. Dadurch kann für das Bedienungspersonal eine besonders hohe Sicherheit erreicht werden.

Im übrigen können die Steuerschaltung 18 und/oder die Prozeßsteuerung 19 und/oder die Steuerungseinheit 20 statt über elektrische Signalwege auch über optische Signalwege kommunizieren.

Abweichend von der Darstellung der Fig. 1 kann der Primärseite des Transformators 2 eine Drosselspule bzw. - vorzugsweise - eine Drosselspulenanordnung mit jeweils einer Drosselspule je Phase der Primärwicklung vorgeschaltet sein, wobei dann die Primärwicklung bzw. Primärwicklungsphasen des Transformators 2 ohne Wicklungsanzapfungen ausgebildet sein können und statt dessen die Drosselspule bzw. Drosselspulen mit Wicklungsanzapfungen versehen sind, zwischen denen das Umschaltaggregat 9 umschalten kann. Damit verändert das Umschaltaggregat 9 den Dämpfungsgrad der Drosselspule bzw. Drosselspulen, mit der Folge, daß sekundärseitig des Transformators 2 die elektrische Strom-Spannungs-Charakteristik in ähnlicher Weise wie beim Umschalten zwischen Wicklungsanzapfungen der Primärwicklung des Transformators 2 verändert wird. Durch den veränderten Dämpfungsgrad beim Umschalten des Umschaltaggregates 9 zwischen Wicklungsanzapfungen der Drosselspule bzw. Drosselspulen wird zusätzlich die erreichbare elektrische Leistung auf der Sekundärseite des Transformators verändert.

## Patentansprüche

1. Schweißstromquelle (1), mit
- einem Transformator (2), der primärseitig zum Anschluß an eine Wechselstromquelle bzw. Wechselstromversorgung und sekundärseitig zur Speisung einer Last mit elektrischen Strombedarf entsprechend einem Schweißstrom ausgelegt ist,
- einem primärseitigen Hauptschaltaggregat (8), welches zwischen einem Einschaltzustand zur leistungsmäßig praktisch ungedrosselten Verbindung von Wechselstromversorgung und Primärseite sowie einem Ausschaltzustand zur leistungsmäßig stark gedrosselten Verbindung oder Unterbrechung der Verbindung von Wechselstromversorgung und Primärseite des Transformators (2) umschaltbar bzw. umsteuerbar ist,
- einem in Reihe mit dem Hauptschaltaggregat (8) - vorzugsweise zwischen Hauptschaltaggregat (8) und Primärseite des Transformators (2) - angeordneten Umschaltaggregat (9), welches zwischen unterschiedlichen Wicklungen bzw. Wicklungsanzapfungen der Primärseite des Transformators (2) und/oder einer der Primärseite des Transformators (2) vorgeschalteten Drosselspule oder Drosselspulenanordnung umzuschalten und damit auch zwischen unterschiedlichen elektrischen Betriebsparametern auf der Sekundärseite des Transformators (2) umzusteuern gestattet, und
- einer den Schaltaggregaten (8,9) zugeordneten Sperrung (17,18), welche das Umschaltaggregat (9) im Einschaltzustand des Hauptschaltaggregates (8) gegen Umschaltung und/oder das Hauptschaltaggregat (8) beim Umschalten des Umschaltaggregates (9) gegen Einnahme seines Einschaltzustandes sperrt und als Steuerschaltung (18) mit einem Geber (19,20) und/oder einem Eingang für Umschaltbefehle zur Betätigung des Umschaltaggregates (9) ausgebildet ist, bei einem Umschaltbefehl zunächst das Hauptschaltaggregat (8) in den Ausschaltzustand setzt, dann das Umschaltaggregat (9) entsprechend dem Umschaltbefehl betätigt und danach das Hauptschaltaggregat (8) erneut in den Einschaltzustand stellt,
- wobei nach Eingang eines Umschaltbefehles oder Betätigung eines Umschalters das Umschaltaggregat (9) erst nach einer zur Erreichung des Ausschaltzustandes des Hauptschaltaggregates (8) notwendigen Verzögerungszeit eingeschaltet wird und/oder daß das Hauptschaltaggregat (8) seinen erneuten Einschaltzustand erst nach einer zur Durchführung der Umschaltung des Umschaltaggregates (9) notwendigen Verzögerungszeit erreicht.

2. Schweißstromquelle nach Anspruch 1,
**dadurch gekennzeichnet,**
**daß** das Hauptschaltaggregat (8) als mehrphasig schaltendes Schütz (10) ausgebildet ist.

3. Schweißstromquelle nach Anspruch 1 oder 2,
**dadurch gekennzeichnet,**
**daß** parallel zu den Schaltstrecken des Hauptschaltaggregates (8) bzw. des Schützes (10) Leitungswege oder Elemente mit einem elektrischen Widerstand angeordnet sind, wobei der Widerstand so bemessen ist, daß das Umschaltaggregat (9) in wesentlichen last frei schaltet.

4. Schweißstromquelle nach einem der Ansprüche 1 bis 3,
**dadurch gekennzeichnet,**
**daß** das Hauptschaltaggregat (8) als kontaktlos steuerbare Drosselschaltung, insb. als Halbleiterschaltung, insbesondere Thyristor-Schaltung, ausgebildet ist.

5. Schweißstromquelle nach einem der Ansprüche 1 bis 4,
**dadurch gekennzeichnet,**
**daß** das Umschaltaggregat (9) durch baumartige Relais-Kaskaden (11,12;13,14;15,16) gebildet wird, deren Relais jeweils nur zwischen alternativen Leitungswegen umschaltbar sind.

6. Schweißstromquelle nach Anspruch 5,
**dadurch gekennzeichnet,**
**daß** jede Relais-Kaskade einer gesonderten Phase der Primärwicklung des Transformators (2) und/oder der Drosselspule (7) zugeordnet ist.

7. Schweißstromquelle nach einem der Ansprüche 1 bis 6,
**dadurch gekennzeichnet,**
**daß** das Umschaltaggregat (9) eine phasenweise unterschiedliche Umschaltung der Primärwicklung des Transformators (2) gestattet.

8. Schweißstromquelle nach einem der Ansprüche 2 bis 7,
**dadurch gekennzeichnet,**
**daß** das Hauptschaltaggregat (8) bei unterbrochener Stromversorgung der Stromquelle (1) und/oder der Steuerschaltung (17,18) automatisch in seinen Ausschaltzustand fällt bzw. bringbar ist, bevor das Umschaltaggregat (9) umschaltet.

9. Schweißstromquelle nach einem der Ansprüche 1 bis 8,
**dadurch gekennzeichnet,**
**daß** die Steuerschaltung (18) einen Eingang für Fehler- bzw. Nichtbereitschaftssignale der Stromversorgung bzw. Stromquelle und/oder kooperierender Systeme z.B. Schweißroboter, aufweist und das Hauptschaltaggregat (8) bei Erhalt eines solchen Signales in den Ausschaltzustand setzt.

## Claims

1. A welding current source (1), with
- a transformer (2), which is designed on the primary side for connection to an alternating current source or alternating current supply, and on the secondary side for feeding a load with an electrical current demand based on a welding current;
- a primary side main switching aggregate (8), which can be switched or alternated between an on-state to connect the alternating current supply and primary side of the transformer at a practically unrestricted power level, and a off-state to connect the alternating current supply and primary side of the transformer (2) at a highly restricted power level, or interrupt the connection,
- a changeover aggregate (9) connected in series with the main switching aggregate (8), preferably between the main switching aggregate (8) and primary side of the transformer (2), which makes it possible to switch between various windings or winding taps of the primary side of the transformer (2) and/or a reactor or reactor arrangement upstream from the primary side of the transformer (2), and hence also to alternate between various electrical operating parameters on the secondary side of the transformer (2), and
- an inhibit (17, 18) allocated to the changeover aggregates (8, 9), which prevents the changeover aggregate (9) from switching over with the main switching aggregate (8) in an on-state, and/or the main switching aggregate (8) from assuming the on-state of the changeover aggregate (9) during its switchover, and is designed as a control circuit (18) with a sensor (19, 20) and/or an input for switchover commands to activate the changeover aggregate (9), which first sets the main switching aggregate (8) in the off-state given a switchover command, then actuates the changeover aggregate (9) according to the switchover command, and thereafter again sets the main switching aggregate (8) in the on-state;
- wherein, upon receipt of a switchover command or actuation of a changeover switch, the changeover aggregate (9) is only activated after a delay necessary to reach the off-state of the main switching aggregate (8), and/or the main switching aggregate (8) only reaches its renewed on-state after a delay necessary to execute the switchover of the changeover aggregate (9).

2. A welding current source according to claim 1, **characterized in that** the main switching aggregate (8) is designed as a multiphase switching contactor (10).

3. A welding current source according to claim 1 or 2, **characterized in that** conducting paths or elements with an electrical resistor are arranged parallel to the switching paths of the main switching aggregate (8) or the contactor (10), wherein the resistor is designed in such a way that the changeover aggregate (9) switches essentially load-free.

4. A welding current source according to one of claims 1 to 3, **characterized in that** the main switching aggregate (8) is designed as a solid-state restrictor circuit, in particular as a semiconductor circuit, in particular as a thyristor circuit.

5. A welding current source according to one of claims 1 to 4, **characterized in that** the changeover aggregate (9) is formed by tree-like relay cascades (11, 12; 13, 14; 15, 16), whose relays can each only be switched between alternative conducting paths.

6. A welding current source according to claim 5, **characterized in that** each relay cascade is allocated to a separate phase of the primary winding of the transformer (2) and/or the reactor (7).

7. A welding current source according to one of claims 1 to 6, **characterized in that** the changeover aggregate (9) permits a switching of the primary winding of the transformer (2) varying in terms of phases.

8. A welding current source according to one of claims 2 to 7, **characterized in that** the main switching aggregate (8) automatically switches or can be switched to its off state given an interrupted power supply of the current source (1) and/or the control circuit (17 18), before the changeover aggregate (9) switches over.

9. A welding current source according to one of claims 1 to 8, **characterized in that** the control circuit (18) has an input for error or not-ready signals of the current supply or current source and/or cooperating systems, e.g., welding robots, and sets the main switching aggregate (8) to the off-state on receipt of such a signal.

## Revendications

1. Source de courant de soudage (1), comprenant
- un transformateur (2), conçu côté primaire pour le raccordement à une source de courant alternatif ou à une alimentation en courant alternatif, et côté secondaire pour l'alimentation d'une charge d'une consommation de courant correspondante à un courant de soudage,
- un groupe de commutation principal (8) côté primaire, qui peut être commuté ou inversé entre un état de connexion pour la liaison pratiquement non réduite en puissance de l'alimentation en courant alternatif et du côté primaire, ainsi qu'entre un état de déconnexion pour la liaison fortement réduite en puissance ou la coupure de la liaison de l'alimentation en courant alternatif et du côté primaire du transformateur (2),
- un groupe d'inversion (9) disposé en série avec le groupe de commutation principal (8) - de préférence entre le groupe de commutation principal (8) et le côté primaire du transformateur (2) -, qui permet de commuter entre différents enroulements ou prises d'enroulement du côté primaire du transformateur (2) et/ou d'une bobine de self ou d'un agencement de bobines de self, montés en amont du côté primaire du transformateur (2), et ainsi également d'inverser entre différents paramètres de fonctionnement électriques sur le côté secondaire du transformateur (2), et
- un blocage (17, 18) associé aux groupes de commutation (8, 9), qui bloque le groupe d'inversion (9) à l'état de connexion du groupe de commutation principal (8) contre l'inversion et/ou le groupe de commutation principal (8) lors de la commutation du groupe d'inversion (9) contre l'occupation de son état de connexion, et est réalisé sous forme de circuit de réglage (18) avec un transmetteur (19, 20) et/ou une entrée pour des instructions d'inversion, pour l'actionnement du groupe d'inversion (9), commute d'abord le groupe de commutation principal (8) dans l'état de déconnexion lors d'une instruction d'inversion, actionne ensuite le groupe d'inversion (9) en fonction de l'instruction d'inversion, puis ramène le groupe de commutation principal (8) dans l'état de connexion,
- après l'entrée d'une instruction d'inversion ou l'actionnement d'un inverseur, le groupe d'inversion (9) n'étant commuté qu'après un temps de retard requis pour l'obtention de l'état de déconnexion du groupe de commutation principal (8) et/ou le groupe de commutation principal (8) n'atteignant son nouvel état de connexion qu'après un temps de retard requis pour la réalisation de la commutation du groupe d'inversion (9).

2. Source de courant de soudage suivant la revendication 1, **caractérisée en ce que** le groupe de commutation principal (8) est réalisé sous forme de contacteur (10) en plusieurs phases.

3. Source de courant de soudage suivant l'une des revendications 1 et 2, **caractérisée en ce que** des parcours de conduction ou des éléments avec une résistance électrique sont disposés en parallèle des parcours de commutation du groupe de commutation principal (8) ou du contacteur (10), la résistance étant calculée de sorte que le groupe d'inversion (9) commute essentiellement sans charge.

4. Source de courant de soudage suivant l'une des revendications 1 à 3, **caractérisée en ce que** le groupe de commutation principal (8) est réalisé sous forme de montage de self pouvant être commandé sans contact, en particulier sous forme de montage de semi-conducteurs, en particulier de montage de thyristors.

5. Source de courant de soudage suivant l'une des revendications 1 à 4, **caractérisée en ce que** le groupe d'inversion (9) est formé par des cascades de relais (11, 12 ; 13, 14 ; 15, 16) en arbre, dont les relais ne peuvent être respectivement commutés qu'entre des parcours de conduction alternatifs.

6. Source de courant de soudage suivant la revendication 5, **caractérisée en ce que** chaque cascade de relais est associée à une phase séparée de l'enroulement primaire du transformateur (2) et/ou de la bobine de self (7).

7. Source de courant de soudage suivant l'une des revendications 1 à 6, **caractérisée en ce que** le groupe d'inversion (9) permet une inversion différente en phase de l'enroulement primaire du transformateur (2).

8. Source de courant de soudage suivant l'une des revendications 2 à 7, **caractérisée en ce que** le groupe de commutation principal (8), en cas de coupure de l'alimentation en courant de la source de courant (1) et/ou du circuit de réglage (17, 18), tombe ou peut être amené automatiquement dans sa position de déconnexion, avant que le groupe d'inversion (9) commute.

9. Source de courant de soudage suivant l'une des revendications 1 à 8, **caractérisée en ce que** le circuit de réglage (18) présente une entrée pour des signaux de défauts ou de non ordre de marche de l'alimentation en courant ou de la source de courant et/ou de systèmes coopérants, par exemple des robots de soudage, et commute le groupe de commutation principal (8) à l'état de déconnexion lors de l'obtention d'un tel signal.
